# FASCICULE DE BREVET EUROPEEN

(11) **EP 2 449 434 B1**
(45) Date de publication et mention de la délivrance du brevet: **05.03.2014**
(21) Numéro de dépôt: 10730148.3
(22) Date de dépôt: 30.06.2010
(51) Int. Cl.: G04G 9/00, G04G 21/08

(54) **MONTRE-BRACELET A ECRAN TACTILE ET PROCEDE D'AFFICHAGE SUR UNE MONTRE A ECRAN TACTILE**
ARMBANDUHR MIT BERÜHRUNGSBILDSCHIRM UND ANZEIGEVERFAHREN FÜR EINE UHR MIT BERÜHRUNGSBILDSCHIRM
WRISTWATCH WITH A TOUCH SCREEN, AND METHOD FOR DISPLAYING ON A TOUCH-SCREEN WATCH

(30) Priorité: 03.07.2009 CH 10362009
(43) Date de publication de la demande: 09.05.2012
(73) Titulaire: Comme Le Temps SA, 1162 Saint-Prex (CH)
(72) Inventeur: HYSEK, Jörg, MC-98000 Monaco (MC); POZZO DI BORGO, Pascal, CH-1820 Montreux (CH)
(74) Mandataire: P&TS SA (AG, Ltd.)
(86) Numéro de dépôt international: PCT/EP2010/059323
(87) Numéro de publication internationale: WO 2011/000893

(56) Documents cités:
- WO-A1-2009/097592
- JP-A- 2009 250 741
- US-A1- 2004 190 380
- US-A1- 2005 278 757
- US-A1- 2006 092 177
- US-A1- 2008 168 404
- US-B1- 6 477 117

## Description

### Domaine technique

La présente invention concerne une montre bracelet, en particulier une montre bracelet électronique disposant d'un écran d'affichage à haute résolution et d'une surface tactile.

### Etat de la technique

Les montres à affichage numérique usuelles comportent plusieurs segments de cristaux liquides commandés sélectivement afin d'afficher des chiffres ou des symboles correspondant par exemple à l'heure en cours. Le nombre de symboles affichables est limité par la configuration des segments.

On connait également des montres-bracelets avec un affichage matriciel, c'est-à-dire un affichage formé d'une matrice de pixels. Ces affichages sont plus flexibles que les affichages à segments, et permettent d'afficher des symboles ou des images quelconques. La présente invention est plus particulièrement concernée par de telles montres avec un affichage matriciel.

Par ailleurs, on connaît des montres bracelets avec une glace tactile qui permet de réagir au contact du doigt de l'utilisateur sur des portions clairement identifiées de la glace. Ainsi, US6967903 décrit une méthode de commande des différentes fonctions d'une montre en appuyant sur des zones tactiles prédéfinies sur la glace. Ces zones se manipulent comme des boutons pour déclencher des fonctions particulières. On parle ici de navigation à zéro dimension : la surface tactile réagit uniquement à des contacts sur des zones précises de la glace. Les zones tactiles étant généralement transparentes, il est nécessaire d'indiquer leur position sur le cadran ou sur la lunette ; le nombre de zones tactiles est ainsi nécessairement limité par la place requise pour ces indications.

EP1394640 décrit une autre montre à commande tactile comportant douze capteurs sur le pourtour de la glace. L'ordre dans lequel les capteurs sont activés est reconnu. Cette montre souffre des mêmes désavantages et permet tout au plus d'introduire douze commandes différentes.

WO2006111481 décrit une montre à écran tactile présentant des zones juxtaposées sélectivement affichables et sensibles au toucher. Les zones tactiles ont la forme des surfaces d'affichage, ce qui est une limitation technologique sérieuse. En pratique, on souhaite souvent favoriser des zones d'affichage de petite dimension, pour augmenter la résolution, et des surfaces tactiles beaucoup plus grande pour réduire la consommation électrique et faciliter la connexion entre la glace tactile et le mouvement.

WO03056397 concerne une montre dans laquelle l'heure est affichée de façon numérique et/ou analogique par un affichage à cristaux liquides. La montre comporte plusieurs électrodes sur la périphérie de la glace, qui peuvent être activées séparément par le doigt.

EP1544178 décrit un procédé de fabrication d'une glace de montre avec des électrodes invisibles formant les capteurs d'un écran tactile.

US6477117 décrit un dispositif portatif avec un écran tactile. L'accès à différentes applications disponibles est effectué en sélectionnant avec le doigt une icône de l'application sur un bureau virtuel - de la même façon que sur un écran d'ordinateur. La taille des icônes qui peuvent être affichées sur un écran de montre est nécessairement très limitée, ce qui pose un problème d'ergonomie particulièrement pour des personnes souffrant d'une réduction de l'acuité visuelle.

On connaît par ailleurs des écrans tactiles à une dimension qui réagissent au déplacement ou à la position du doigt le long d'un axe linéaire. CH627615 décrit par exemple une montre avec une électrode capacitive de forme triangulaire. Le circuit électronique est capable de détecter la position du doigt le long de cette électrode. De tels écrans linéaires sont typiquement utilisés pour commander des boutons ou organes de réglage linéaires, par exemple pour déverrouiller un équipement ou pour régler un volume sonore.

On connaît enfin des écrans tactiles à deux dimensions qui sont capables de détecter et de réagir à des déplacements du doigt selon deux directions distinctes sur la surface de l'écran. Par rapport aux systèmes à zéro dimension qui réagissent à la position absolue du doigt, les systèmes tactiles détectant le mouvement et/ou la trajectoire du doigt offrent l'avantage d'une manipulation plus ergonomique. Le doigt peut ainsi être déplacé en n'importe quel endroit de l'écran ; il n'est pas nécessaire d'indiquer la zone à activer.

Les surfaces tactiles à deux dimensions emploient des électrodes très rapprochées, pratiquement contigües. Le doigt posé sur la surface tactile recouvre généralement des portions variables de plusieurs électrodes adjacentes. Un logiciel calcule le centre de gravité du doigt à partir des signaux fournis par plusieurs électrodes, et détermine le déplacement du doigt à partir de la variation de la position de ce centre de gravité dans le temps.

Les écrans tactiles à deux dimensions nécessitent donc des électrodes et un circuit de traitement de signaux nettement plus complexes que les écrans à zéro ou à une seule dimension ; ils sont généralement réservés à des appareils disposant d'une puissance de calcul et d'une alimentation suffisantes, par exemple des ordinateurs portables, des PDAs et plus récemment de nombreux téléphones portables. Ces équipements disposent d'écrans avec une surface nettement plus grande que celle d'une glace de montre; même un téléphone mobile a un affichage nettement plus grand que celui des plus larges montres envisageables. Ces grandes tailles d'écran permettent d'afficher des éléments d'interface graphique, par exemple plusieurs icônes, des barres de menu, etc qu'il est pratiquement impossible de représenter sur une montre bracelet. La navigation entre les différents programmes ou documents dans l'interface graphique d'une montre-bracelet pose donc des problèmes très spécifiques et différents de ceux qui se posent avec un écran même légèrement plus grand.

Les montres sont généralement considérées trop petites pour permettre ou nécessiter une détection du déplacement du doigt. En outre, un préjugé existe en horlogerie à l'encontre des écrans tactiles évolués, dont on redoute la consommation électrique, le temps de rafraichissement ou la puissance de calcul nécessaires. D'autre part, l'écran des montres est généralement considéré trop petit pour permettre une sélection de fonctions au moyen d'icones ou d'autres widgets que l'on retrouve fréquemment dans les interfaces graphiques utilisateur des ordinateurs ou téléphones mobiles.

En raison de ces préjugés, et parce que l'utilité d'une détection de déplacement sur une glace de montre à surface réduite n'est pas évidente, les montres à affichage numérique ne sont pas munies de surfaces tactiles à deux dimensions, ni de logiciels permettant de détecter un déplacement du doigt selon deux directions.

Par ailleurs, on distingue également entre des surfaces tactiles single touch (monotactile) et des surfaces multitouch (ou multitactiles). Par surface multitouch, on entend dans la présente demande une surface ou un écran tactile capable de détecter plusieurs points de contact simultanés, par exemple les déplacements simultanés de plusieurs doigts sur la surface tactile. Les électrodes de ces équipements sont généralement associées à un circuit ou à un logiciel qui interprète ces contacts simultanés et qui les convertit en commandes pour une interface graphique utilisateur.

Ainsi, EP1808751 décrit une montre avec des touches tactiles capacitives en forme de L et qui sont dimensionnées de façon à permettre au doigt de sélectionner une ou deux touches adjacentes simultanément. Cette montre permet de détecter le contact d'un doigt sur deux électrodes adjacentes, mais pas le contact de deux doigts distincts sur des électrodes éloignées ; il ne s'agit donc pas d'un écran multitouch.

Il existe également un préjugé dans l'état de la technique à l'encontre de l'emploi d'écrans multitouch dans les montres-bracelets, dont la glace est généralement considérée comme trop petite pour permettre le contact, ou à plus forte raison le déplacement simultané de plusieurs doigts.

Un nombre limité de documents décrivent néanmoins des montres bracelets qui permettent d'introduire des commandes en déplaçant le doigt sur une glace tactile.

US7170496 décrit un système d'entrée de données pour appareil électronique compact, permettant notamment de sélectionner des caractères dans une matrice à l'aide de différents mouvements du doigt. La solution proposée permet uniquement une navigation dans un menu particulier préparé à cet effet ; l'introduction de données nécessite un apprentissage fastidieux.

US2006092177 décrit une montre avec un capteur dans chaque coin permettant d'introduire différentes commandes en sélectionnant un des capteurs ou une suite de capteurs actionnés dans un ordre particulier. Une des commandes permet d'afficher une « carte » qui présente des informations complémentaires, par exemple une liste de messages reçus, une liste d'alarmes etc. Cette carte est affichée pendant une durée limitée et disparait automatiquement après un bref délai. La disposition des électrodes non contigües qui est suggérée dans ce document rend cependant l'introduction des commandes peu intuitive ; il ne s'agit pas ici d'une surface tactile à deux dimensions. L'utilisateur doit déplacer son doigt précisément sur les surfaces tactiles, et un déplacement du doigt passant par le centre de la glace ne sera pas détecté. Des séquences de sélection complexes et difficiles à mémoriser doivent être utilisées pour accéder aux différentes fonctions proposées. Le nombre de fonctions connexes qui peuvent être affichées est limité par le nombre de capteurs.

Le document WO 2009097592 décrit une montre à écran tactile comprenant un mode icônes. Le déplacement d'un doigt sur l'écran provoque un défilement des icônes. Une commande supplémentaire sert de choisir une application en choisissant une icône.

Il existe donc un besoin dans l'art antérieur pour une montre bracelet munie d'une glace tactile permettant d'introduire des commandes sans devoir appuyer sur une zone particulière de la glace.

Il existe en particulier un besoin pour une montre bracelet permettant de détecter des déplacements du doigt sur l'écran tactile.

En particulier il existe un besoin pour une montre bracelet dont au moins certains éléments, y compris la surface tactile, le circuit de traitement de signaux provenant des électrodes de cette surface, le processeur et l'interface graphique, sont adaptés aux contraintes particulières d'une montre-bracelet, en particulier à la surface réduite de l'écran et aux exigences très strictes en terme de consommation électrique et de puissance de calcul disponible.

Il existe aussi un besoin pour une montre bracelet permettant d'afficher un grand nombre d'indications différentes sans pour autant encombrer l'affichage. Cette montre devrait en outre permettre d'accéder facilement et intuitivement aux différentes informations disponibles, au moyen de commandes faciles à apprendre et à introduire sur une glace tactile.

Il existe également un besoin pour une montre-bracelet permettant de personnaliser le type d'informations affichées, et la manière de présenter ces informations.

### Bref résumé de l'invention

Selon l'invention, ces buts sont atteints notamment au moyen d'une montre bracelet selon la revendication 1.

Dans la présente description, le terme « carte » décrit un contrôle, ou widget, affiché sur l'interface graphique de la montre pour représenter sur la totalité de l'écran une entité telle que l'heure courante, une phase de lune, un affichage chronographe etc. Une carte comporte une image de fond d'écran qui est destinée à occuper tout l'écran de la montre ; cette image peut être fixe, par exemple pour afficher une photo, ou rafraichie périodiquement, par exemple pour afficher l'heure courante. La carte peut en outre être associée à une fonction (programme ou module informatique) déterminant les indications affichées sur le fond d'écran ; par exemple, une carte peut être associée à un programme calculant et affichant sous forme texte ou graphique une phase de lune. Une carte peut en outre définir le comportement de l'interface tactile, et les fonctions ou modules qui doivent être démarrés en fonction des déplacements du doigt sur l'écran.

Ainsi, la navigation dans l'interface graphique de la montre se fait par défilement de cartes virtuellement juxtaposées, de manière à remplacer toute l'image d'une carte par une autre image correspondant par exemple à une carte et pour afficher autre fonction. On évite ainsi les inconvénients des interfaces graphiques conventionnelles dans lesquelles le lancement de programmes ou de fonctions se fait en sélectionnant une minuscule icône du programme sur le fond d'écran. Ici, les icones sont remplacées par des cartes qui occupent généralement la totalité de l'écran, et qui affichent l'information utile.

Ces cartes peuvent être personnalisées par l'utilisateur, qui a aussi la possibilité d'ajouter de nouvelles cartes depuis un ordinateur externe connecté à la montre, afin d'ajouter de nouvelles fonctions et/ou de modifier la façon dont une indication est affichée.

L'invention part aussi de la constatation que le nombre de mouvements différents que les utilisateurs peuvent et veulent apprendre pour manipuler une montre est limité. Dans ce but, le logiciel de la montre est avantageusement commandé principalement ou même exclusivement à l'aide de déplacements horizontaux ou verticaux du doigt sur la glace. La plupart des fonctions de la montre, voire toutes les fonctions, peuvent donc être accédées avec ces deux commandes très simples.

La glace tactile permet de détecter de manière fiable des déplacements du doigt dans une direction horizontale ou verticale, sans que l'utilisateur ne doive passer sur des électrodes particulières pour entrer une commande donnée.

Dans une variante, des commandes de « tap » (bref contact du doigt sur la glace) voire de double « tap » (deux brefs contacts rapprochés) peuvent également être introduites, par exemple pour confirmer une commande ou démarrer une fonction, de façon analogue au « clic » et « double clic » effectués avec la souris d'une interface graphique d'ordinateur. Ces commandes peuvent selon les cas être effectuées sur des zones clairement affichées de l'écran - par exemple sur un bouton « START » en mode chronographe - ou n'importe où sur l'écran.

La montre-bracelet présente aussi l'avantage de passer d'une carte à une autre très simplement, par de simples déplacements horizontaux ou verticaux du doigt sur la glace afin de provoquer un défilement des cartes juxtaposées.

Le défilement d'une carte à l'autre peut par exemple correspondre à un changement de mode de la montre. Par exemple, le passage d'un mode « affichage de l'heure courante » à un mode « affichage d'un autre fuseau horaire » se fait par défilement de cartes, et en remplaçant toute l'image affichée sur l'écran de la montre par l'image d'une autre carte.

La présente invention concerne aussi l'organisation des cartes, et le précédé de défilement employé afin de rendre la manipulation aussi rapide et intuitive que possible.

Dans le présent texte, la direction « horizontale » de la montre correspond à la direction {9 heures - 3 heures} sur le cadran d'une montre traditionnelle ; la direction « verticale » est parallèle à la direction {6 heures - 12 heures}.

### Brève description des figures

Des exemples de mise en oeuvre de l'invention sont indiqués dans la description illustrée par les figures annexées dans lesquelles :

Les figures 1a et 1b illustrent une vue en perspective de deux exemples de montre-bracelet selon l'invention, avec deux cartes différentes affichées.

La figure 2 illustre de manière schématique l'arrangement virtuel de différentes cartes dans le menu de la montre.

Les figures 3a à 3d illustrent schématiquement l'affichage de la montre suite à l'introduction d'une commande de défilement vertical pour remplacer la carte initialement affichée par une autre carte.

Les figures 4A à 4C illustrent schématiquement l'organisation des cartes sur plusieurs niveaux de navigation dans un mode de réalisation de la montre.

### Exemple(s) de mode de réalisation de l'invention

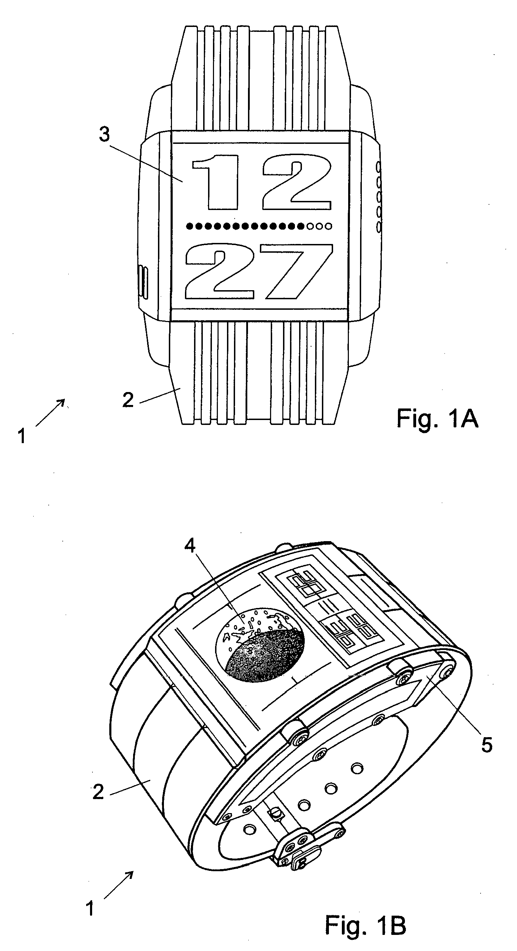

Les figures 1A et 1B illustrent deux exemples de montre-bracelet 1 selon l'invention. La montre illustrée comporte notamment un bracelet 2 et un boitier 5 muni d'une glace 3 recouvrant un affichage matriciel numérique 4.

Le boitier 5 peut comporter des organes de commande, par exemple des boutons-poussoirs, une couronne, etc., qui ne sont cependant pas indispensables à la manipulation ; dans un mode de réalisation préférentiel, la montre est dépourvue de couronne et comporte uniquement des boutons poussoirs (non représentés) pour allumer ou éteindre l'écran, ou pour régler sa luminosité. Un capteur de luminosité permettant d'adapter automatiquement l'intensité de l'écran à la luminosité ambiante peut aussi être employé en option. La montre peut passer quasi instantanément d'un mode de veille, dans lequel l'affichage est éteint ou en tout cas moins lumineux, à un mode « lecture de l'heure » et/ou navigation, par exemple dès que la glace est effleurée ou suite à un tap ou double tap sur l'écran tactile.

Le boitier 5 peut aussi comporter un connecteur pour relier la montre à un ordinateur externe, par exemple un connecteur micro- ou nano-USB sur le fond ou dans un des flancs de la montre. Des moyens de connexion sans fils, par exemple un module ZigBee ou Bluetooth, peuvent aussi être prévus.

L'alimentation électrique de la montre se fait avantageusement au moyen d'un accumulateur rechargeable au travers d'un connecteur micro- ou nano-USB, d'un connecteur spécifique ou propriétaire ou, dans une variante, au travers d'une interface radiofréquence.

Le bracelet 2 peut par exemple être réalisé en caoutchouc, ou dans tout autre matériau adapté. Dans un mode de réalisation, il comporte des indicateurs additionnels, par exemple des LEDs ou un écran LCD, noyés dans le matériau du bracelet et permettant d'afficher des indications complémentaires à celles de l'affichage matriciel 4. Les indicateurs sont de préférence alimentés et commandés par le circuit de traitement de la montre (non illustré) et permettent par exemple d'afficher des indications relatives à l'état de la montre (par exemple l'état de charge de la batterie), ou des indications temporelles dépendant de l'affiche en cours (par exemple un nombre de tours chronométrés, etc.). Il existe donc une liaison électrique entre les indicateurs du bracelet et le mouvement électronique de la montre.

La glace 3 ferme la surface supérieure du boîtier et recouvre l'affichage matriciel numérique 4. Elle est de préférence réalisée en saphir ou dans un autre matériau inrayable, et recouverte d'un traitement antireflet. Dans un mode de réalisation préférentielle, la glace est bombée cylindrique, ou éventuellement bombée sphérique.

Des électrodes transparentes sont déposées dans ou sous la glace 3 afin de détecter la présence d'un doigt ou d'un stylet. La technologie de détection utilise de préférence des procédés connus dans l'état de la technique, par exemple une détection capacitive.

Un affichage matriciel numérique à haute résolution 4 occupe la quasi totalité de la surface sous la glace 3, et sert ainsi à la fois de cadran de montre et d'indicateur horaire. Dans un mode de réalisation préférentiel, l'affichage est constitué par un affichage à cristaux liquides couleur (LCD ou TFT) avec au moins 150X150 pixels. D'autres types d'affichages, y compris des affichages basés sur la technologie OLED par exemple, peuvent être employés. Par ailleurs, la montre pourrait aussi comporter plusieurs affichages, par exemple plusieurs affichages numériques, ou un afficheur matriciel numérique combiné avec des aiguilles ou d'autres indicateurs mécaniques.

Le circuit de traitement évoqué permet d'interpréter les signaux provenant des électrodes et d'afficher sur l'affichage matriciel 4 des indications qui dépendent de ces signaux. Le circuit de traitement comprend typiquement un microcontrôleur pour contrôler l'affichage matriciel, un autre microcontrôleur pour contrôler l'interface tactile, et un microcontrôleur général pour déterminer les indications à afficher en chaque instant, selon la carte sélectionnée. Ces différents microcontrôleurs peuvent aussi être regroupés autrement.

Un circuit d'entrée-sortie, par exemple un décodeur USB, ou un récepteur Bluetooth ou ZigBee, peut aussi être prévu.

Le circuit de traitement est spécifiquement agencé pour interpréter les signaux desdites électrodes, pour sélectionner une carte parmi plusieurs cartes disponibles en fonction de ces signaux, et pour afficher ladite carte sur la totalité dudit affichage matriciel numérique ; cet agencement se fait de préférence en stockant dans la mémoire du microcontrôleur un programme informatique (firmware) permettant de commander ce fonctionnement spécifique. Le firmware provoque l'affichage des cartes incluant des images stockées en mémoire et qui sont restituées sur l'affichage 4. Avantageusement, le logiciel et/ou les données utilisées par ce logiciel, peuvent être modifiés ou mis à jour par l'utilisateur, par exemple au travers de l'interface USB, Bluetooth, ZigBee, etc., évoquée plus haut. Cette interface permet par exemple de charger de nouvelles cartes, ou de nouvelles images utilisées sur ces cartes, et de personnaliser ainsi les cartes et les éléments graphiques représentés sur ces cartes.

La taille et la résolution de l'affichage 4 sont suffisantes pour afficher simultanément plusieurs indications sur la même carte, par exemple l'heure courante sur la figure 1A, ou l'heure courante et la phase de lune sur la figure 1B. Afin d'étendre les fonctionnalités de la montre, l'utilisateur peut passer d'un mode d'affichage à un autre, et par exemple remplacer la carte affichée sur la figure 1A par la carte de la figure 1B.

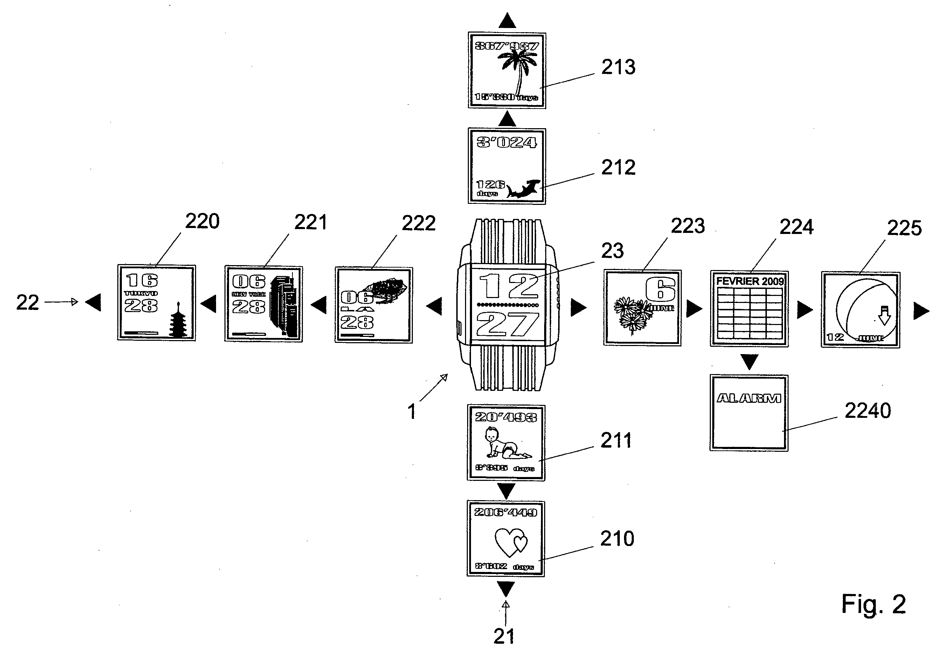

La figure 2 illustre de manière schématique un arrangement possible de cartes selon un mode de réalisation de l'invention. Chaque carte correspond à un écran virtuel et permet d'afficher des indications et/ou des images dépendant de la carte. La taille de la carte correspond à la taille de l'affichage ; la surface totale à disposition correspond donc à la somme de la surface des cartes, soit un multiple de la surface de l'affichage. L'utilisateur peut modifier l'affichage en cours en remplaçant de manière permanente, jusqu'au prochain remplacement, la carte affichée par n'importe quelle autre carte sélectionnée parmi la liste de cartes disponibles.

Dans cet arrangement, les cartes sont arrangées virtuellement de manière à constituer une rangée 22 et une colonne virtuelle 21 de cartes. L'utilisateur peut faire défiler les cartes dans la direction horizontale, afin de remplacer la carte courante 23 par n'importe quelle autre carte 220 à 225 de la rangée 22. De la même façon, l'utilisateur peut faire défiler les cartes verticalement afin de choisir une des cartes 210 à 213 de la colonne 21.

Le défilement des cartes dans la direction horizontale ou verticale est obtenu en déplaçant le doigt sur la glace dans la direction et selon le sens correspondants. Ainsi l'utilisateur peut facilement consulter les cartes disponibles, et choisir une carte particulière, avec de simples mouvements du doigt dans la direction horizontale ou verticale. Le nombre de cartes dans la colonne 21 et dans la rangée 22 n'est limité que par la capacité mémoire de la montre.

Avantageusement, l'utilisateur peut ajouter des cartes, supprimer des cartes, modifier l'ordre des cartes dans la rangée et la colonne, etc., depuis un menu particulier de la montre ou depuis un ordinateur personnel connecté à la carte. Chaque carte peut être associée à un programme ou module informatique pour calculer les données affichées, et à des données utilisées par ce module, par exemple une image de fond d'écran ou des préférences d'utilisateur stockées dans la montre. L'utilisateur peut aussi ajouter ses propres images comme fond d'écran ou illustration dans des cartes existantes, ou ajouter des cartes avec ses images.

Comme indiqué, chaque carte peut afficher une indication différente ou correspondre à un mode de fonctionnement particulier de la montre. Par exemple, les cartes 220, 221 et 222 sont utilisées pour afficher l'heure courante dans les fuseaux horaires de Tokyo, New York et Los Angeles. Les cartes 210, 211, 212 et 213 permettent d'afficher le nombre de jours, respectivement d'heures, depuis un instant donné, par exemple depuis la naissance, depuis le mariage, l'arrêt de la cigarette, etc. D'autres cartes peuvent être utilisées pour afficher des phases de lune, un calendrier, ou d'autres indications horaires ou non horaires. Par ailleurs, différentes cartes peuvent se distinguer uniquement par des caractéristiques graphiques, par exemple une image de fond, ou une représentation particulière des données affichées. Par exemple, une carte pourrait afficher l'heure avec des symboles alphanumériques comme sur la figure 1A, une autre carte la même heure avec des aiguilles dessinées avec des pixels sur l'affichage, et une troisième carte avec une représentation graphique au moyen de séquences de symboles colorés dont le nombre correspond à l'heure et aux minutes de l'heure courante.

L'organisation des cartes en croix facilite le défilement et la recherche des cartes. Avantageusement, lorsque les cartes de la colonne 21 défilent successivement sur l'affichage, la rangée 22 n'est pas altérée ; l'utilisateur peut donc toujours passer à la carte 223 par un simple défilement vers la gauche, quelle que soit la carte actuellement affichée au sein de l'unique colonne verticale 21. De la même façon, l'utilisateur peut toujours accéder directement avec une seule commande verticale à n'importe quelle carte de la colonne 21, quelle que soit la carte actuellement affichée au sein de l'unique rangée 22.

Le défilement des cartes étant très rapide, cette organisation permet de retrouver facilement n'importe quelle carte, même lorsque le nombre de cartes proposées est important. Par rapport à une organisation matricielle, on évite ainsi le risque que l'utilisateur doive effectuer plusieurs défilements successifs ou qu'il ne parvienne pas à retrouver une carte particulière.

Des exceptions sont cependant possibles, par exemple si elles facilitent le passage d'une carte à une autre carte apparentée. Ainsi, sur l'exemple de la figure 2, la sélection de la carte 224 au sein de la rangée horizontale 22 permet de passer directement à la carte apparentée 2240 avec une commande de défilement vertical. Cette exception est par exemple utile pour afficher successivement différentes semaines ou différents mois d'un calendrier depuis une page particulière du calendrier.

D'autres arrangements de cartes sont aussi possibles ; par exemple, il serait aussi possible d'avoir une matrice de cartes avec par exemple toutes les fonctions liées aux anniversaires dans une colonne, toutes les fonctions liées à la lune dans une autre colonne etc et une navigation horizontale sur la rangée centrale pour le menu principal.

Dans une autre variante, le passage de la carte 224 à la carte 2240 (par exemple) se fait avec une commande tactile différente - par exemple un déplacement oblique, un tap, un double tap ou un appui long qui peut être effectué n'importe où sur la glace, ou par sélection d'une zone particulière de l'image.

Les cartes de la rangée 22 et/ou de la colonne 21 peuvent avantageusement être organisées en boucles fermées ; la poursuite du défilement après la dernière carte permet ainsi de revenir à la première, et vice-versa. L'utilisateur a ainsi l'impression de parcourir cycliquement des cartes arrangées sur la surface d'un cylindre ou d'une sphère en rotation.

Dans un autre mode de réalisation, l'introduction d'une commande de défilement sur l'écran tactile provoque toujours un retour immédiat vers une carte de départ 23, puis un défilement depuis cette carte dans la direction de défilement donnée par la commande. Cette variante facilite encore la navigation qui se fait toujours depuis le même point et nécessite ainsi toujours les mêmes déplacements pour parvenir à la même carte de destination. On évite par ailleurs la confusion si une même carte 23 peut défiler soit horizontalement dans la rangée 22, soit verticalement dans la colonne 21.

Dans un autre mode de réalisation, le retour à la carte de départ 23 est effectué manuellement ; l'utilisateur doit tout d'abord retourner manuellement vers cette carte avant de pouvoir changer de direction de défilement et d'accéder aux autres cartes disponibles. D'autres commandes de retour à la carte de départ 23 sont imaginables, par exemple avec une zone de commande réservée à cet effet.

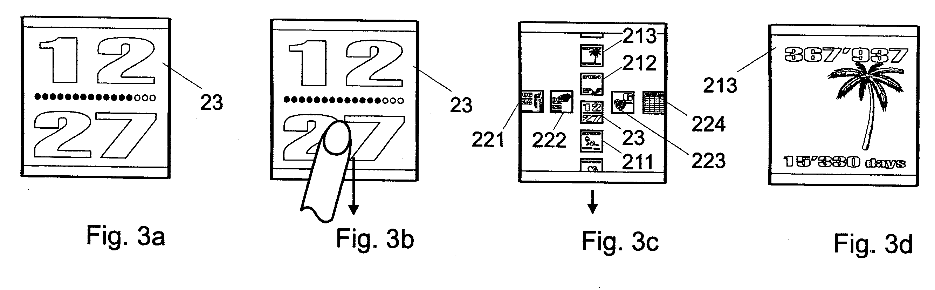

Les figures 3a à 3d illustrent à titre d'exemple une séquence de défilement horizontal qui permet de remplacer la carte de départ 23 affichée sur la figure 3a par la carte 213 de la figure 3d. La figure 3a montre l'affichage initial de l'heure courante au moyen de la carte 23. L'utilisateur souhaite maintenant remplacer cette carte par une autre carte 213 qui lui indique le nombre de jours et d'heures depuis sa naissance. Dans ce but, il introduit sur la figure 3b une commande de défilement vertical en déplaçant son doigt de haut en bas en n'importe quel endroit sur la glace de la montre.

Sur la figure 3c, les cartes successives de la colonne 21 défilent automatiquement et en continu dans le sens de défilement déterminé par la direction du doigt sur la glace.

Dans le mode de réalisation avantageux qui est illustré, le processeur affiche simultanément plusieurs cartes en taille réduite pendant le défilement. Ce contre-zoom optionnel permet à l'utilisateur de mieux visualiser le défilement, et de retrouver plus rapidement la position de la carte vers laquelle il souhaite parvenir.

Le défilement se poursuit en continu même lorsque l'utilisateur a relâché le doigt. La vitesse du défilement des cartes sur la figure 3c peut avantageusement dépendre de la vitesse et/ou de l'amplitude de déplacement du doigt sur la surface tactile ; une vitesse plus importante est obtenue en donnant une impulsion de grande ampleur très rapide. Avantageusement, le microcontrôleur détermine l'énergie associée à la trajectoire du doigt sur la glace tactile, qui varie en fonction du carré de la vitesse de déplacement du doigt, et simule ensuite la rotation d'un cylindre virtuel -ou d'une sphère -portant les cartes et entraîné avec une énergie correspondante.

Pour plus de réalisme, la vitesse de défilement des cartes n'est pas constante, mais diminue progressivement, comme si un frottement ralentissait la rotation du cylindre. Il est aussi possible de ralentir le défilement à chaque passage d'une carte à l'autre, puis d'accélérer à nouveau le cylindre après ce passage - un peu à la manière d'une roue de tombola qui est freinée à chaque fois que le ressort passe sur un des clous en périphérie de la roue.

Le défilement s'arrête ensuite de lui-même après un instant déterminé ou lorsque la vitesse de défilement descend en dessous d'un seuil. L'affichage est alors à nouveau agrandi et la carte 213 qui occupe le centre de gravité de l'affichage au moment de l'arrêt est alignée avec le bord de l'affichage, et affichée sur tout l'affichage.

De manière avantageuse, l'utilisateur peut aussi arrêter lui-même le défilement lorsque la bonne carte est affichée - par exemple en donnant un bref tap du doigt au centre de l'écran, ou au contraire en appuyant durablement sur l'écran. Des commandes de déplacement en sens opposé permettent d'inverser la direction de défilement.

Un affichage horizontal ou vertical en mode discret (image par image, à chaque fois que l'on balaye horizontalement ou verticalement) est aussi possible en option. Dans un autre mode de défilement, les cartes sont affichées en simulant de manière visuelle les pages d'un livre que l'on tourne de gauche à droite (ou inversement) lorsque l'on défile horizontalement, et de haut en bas (ou inversement) lors de déplacement vertical.

La navigation parmi les différentes informations affichables par la montre est particulièrement simple puisqu'elle est obtenue simplement par remplacement de cartes, et avec des manipulations simples sur l'écran tactile. Deux commandes - défilement horizontal ou défilement vertical - suffisent en principe pour sélectionner n'importe quelle carte et afficher ainsi toutes les indications que la montre peut afficher.

Cela n'exclut cependant pas la possibilité d'introduire d'autres commandes avec d'autres manipulations. Ainsi, l'affichage en taille réduite de la figure 3c peut avantageusement être obtenu à n'importe quel instant sans faire défiler les cartes, en introduisant une commande appropriée. Cet affichage en taille réduite constitue une sorte de table des matières graphiques qui permet à l'utilisateur de déterminer le meilleur chemin pour parvenir à la carte désirée.

Il est aussi possible d'introduire des commandes tactiles dont l'interprétation dépend de la carte actuellement affichée. Par exemple, la modification de l'heure en cours, ou l'introduction d'une alarme, peuvent être initiées depuis des cartes correspondantes à l'aide de commandes particulières, par exemple avec un double tap au centre de la glace pour afficher un menu ou un widget permettant d'introduire la modification souhaitée.

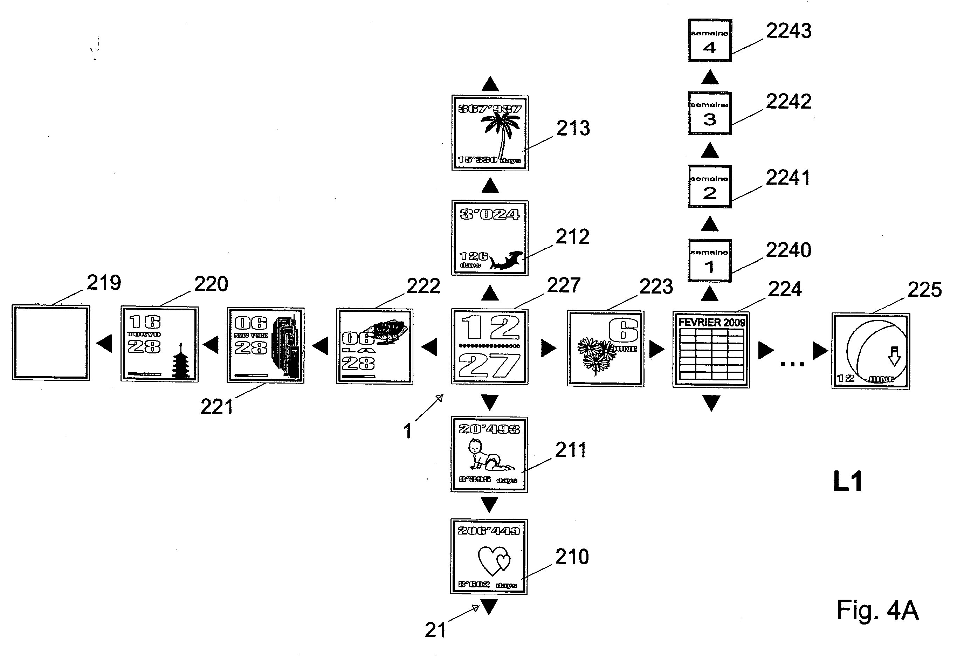

Une organisation particulièrement avantageuse des cartes affichées sur les écrans est illustrée à titre d'exemple en relation avec les figures 4a à 4c. Dans ce mode de réalisation, les cartes sont organisées en n niveaux, par exemple en 3 niveaux L1, L2, L3 dans cet exemple. Chaque niveau regroupe des cartes affichant des informations de même type. Dans cet exemple, le niveau L1 affiché sur la figure 4a affiche des informations de base liées par exemple à l'heure, à la date, au calendrier etc; l'organisation de ce niveau est proche de celui illustré sur la figure 2, mais la navigation est en partie différente, et ce niveau peut en outre être quitté depuis la position centrale pour accéder à l'un des autres niveaux L2 à Ln.

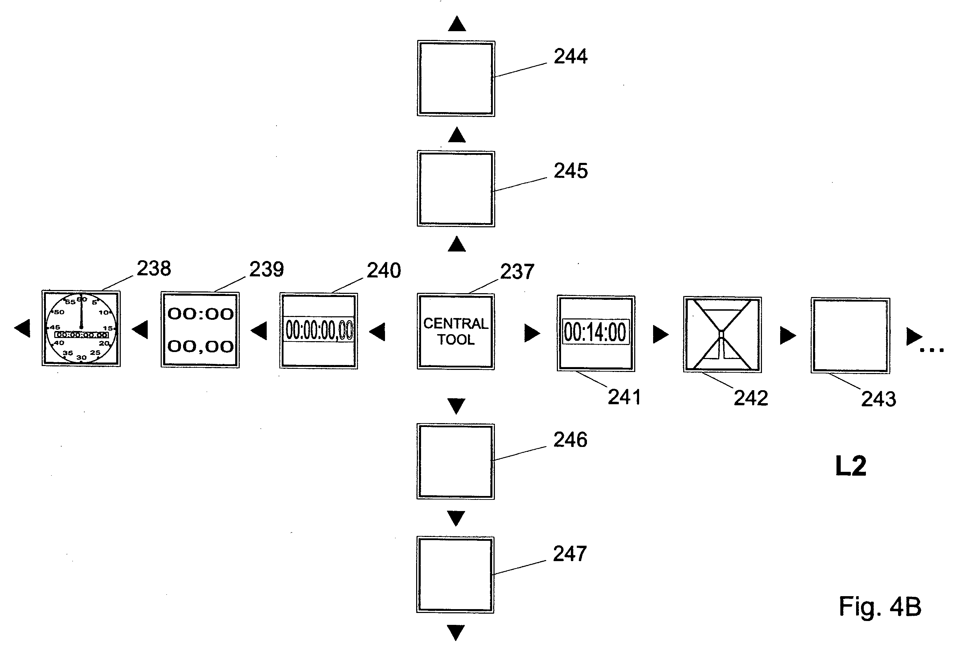

Le niveau L2 illustré sur la figure 4b regroupe des cartes consacrées à différentes complications horlogères telles que chronographes, réveils, comptes à rebours, etc. Le niveau L3 regroupe quant à lui des cartes affichant des mouvements mécaniques virtuels. L'utilisateur peut ajouter des nouvelles cartes sur n'importe lequel de ces niveaux ; avantageusement, le processeur de la montre exécute un programme qui permet de placer les nouvelles cartes chargées dans la montre automatiquement au niveau le plus adapté, et au bon emplacement de ce niveau, en fonction d'attributs ou de métadonnées associés à chaque carte.

Sur chaque niveau, les cartes sont rangées principalement selon une croix avec quatre branches principales (gauche, droite, haut, bas). Des bifurcations à partir d'une branche principale sont éventuellement possibles à titre exceptionnel pour afficher plus de détails au sujet d'une carte particulière, par exemple pour passer en mode affichage semaine plutôt que affichage mois dans une carte de type calendrier. Ainsi, la navigation au sein d'un niveau se fait principalement par des opérations de défilement horizontal ou vertical, ce qui permet de minimiser le risque de se perdre dans l'arborescence des cartes. Le défilement dans une direction donnée se fait en déplaçant le doigt sur l'écran tactile, ce qui provoque un déplacement des cartes en continu dans la direction privilégiée du doigt; la vitesse et l'amplitude de déplacement des cartes dépendent de l'impulsion donnée avec le doigt. L'utilisateur peut arrêter le défilement et sélectionner une carte lors du défilement par un tap sur cette carte ; la carte choisie se centre alors automatiquement.

Le passage d'un niveau à l'autre se fait en boucle, de préférence toujours à partir de la carte au centre de la croix, avec une commande appropriée. Dans un exemple, le passage d'un niveau à l'autre se fait en appuyant pendant une durée suffisante (par exemple au moins deux secondes) sur une électrode au centre de la carte centrale, ou sur une icône dédiée de cette carte. Par défaut, l'affichage retourne de lui-même à l'affichage de la carte au centre du niveau en cours, par exemple à la mise sous tension de l'affichage ou après une durée déterminée. De cette manière, la navigation est confortable même sur un écran de petite taille, et l'utilisateur ne risque pas de se perdre dans une arborescence complexe.

La figure 4a illustre un exemple d'organisation des cartes sur le niveau 1, consacré aux fonctions de base de la montre. A partir de la carte centrale 227 qui affiche par exemple l'heure courante sous forme analogique et/ou numérique, l'utilisateur peut naviguer selon un axe vertical et se déplacer pour aller sur d'autres cartes avec des images fixes ou animées 210 à 213. Dans l'exemple illustré, les cartes 212 et 213 affichées sur la branche verticale du haut correspondent à des événements futurs, par exemple des vacances prévues ou une manifestation importante ; la carte peut par exemple afficher la durée restante jusqu'à cet événement. Les cartes 211 et 210 affichées sur la branche verticale du bas correspondent à des événements passés, par exemple la naissance ou le mariage ; la carte peut par exemple afficher la durée écoulée depuis cet événement. L'utilisateur peut personnaliser les cartes de chaque événement avec ses propres images, ou ajouter de nouvelles cartes correspondant à d'autres événements via un ordinateur connecté de façon temporaire à la montre.

Le nombre de cartes disponibles sur cet axe vertical n'est limité que par la capacité mémoire de la montre. L'image affichée en fond d'écran sur une carte particulière peut être fixe, ou changée automatiquement en mode diaporama parmi une collection de carte associée à une carte particulière. Par exemple, un utilisateur peut associer à une carte particulière un diaporama de son mariage, et à une autre cartes des images de ses vacances. D'autres cartes peuvent être associées à des images vidéo animées. Ces données sont téléchargées de préférence depuis un ordinateur connecté de façon temporaire à la montre.

L'axe horizontal du premier niveau L1 sur la figure 4a permet de changer de fuseau horaire (en se déplaçant vers la gauche en direction des cartes 220 à 222) ou d'afficher un calendrier en se déplaçant vers la droite depuis la position centrale. Les cartes 220 à 222 vers la gauche comportent de préférence une image, un texte ou un graphique illustrant un fuseau horaire particulier, par exemple avec le nom du fuseau horaire ou une image évoquant une ville de ce fuseau. L'utilisateur choisit un fuseau horaire donné simplement en défilant horizontalement; il confirme sa sélection par exemple au moyen d'une pression longue au centre de l'écran (par exemple au moins une seconde), faute de quoi la montre retourne d'elle-même vers l'affichage de la carte centrale 227.

Le remplacement de la carte peut aussi provoquer une modification du type d'affichage de l'heure, et par exemple passer d'un affichage de l'heure analogique à un affichage numérique avec une police, une taille, une couleur et un choix des indications variable d'une carte à l'autre le long de cet axe. Dans un mode de réalisation, l'utilisateur peut choisir depuis son ordinateur la police et la couleur utilisée pour l'affichage de l'heure sur chacune des cartes, ainsi qu'éventuellement la position de cet affichage, la taille et le type d'indications affichées.

Le fond d'écran affiché sur les cartes est typiquement constitué par une image fixe ou animée préenregistrée comme fichier dans la montre. Les indications superposées, comme l'heure ou d'autres indications, sont de préférence constituées par des images de synthèse générées en temps réel par la montre et superposées sur le fond.

Depuis un ordinateur connecté à la montre, un utilisateur peut ajouter ou définir différentes cartes sur l'axe horizontal (et ailleurs dans l'arborescence de n'importe quel niveau), par exemple ajouter des cartes correspondant à des fuseaux horaires qui lui sont utiles. Il est aussi possible de supprimer certains fuseaux horaires moins utiles, ou de modifier la séquence des fuseaux horaires afin de regrouper les fuseaux les plus utiles près de la carte centrale 227. Depuis la carte centrale et depuis une carte de fuseau horaire particulière, par exemple depuis la carte 221, une mise à l'heure est possible en sélectionnant le chiffre des heures, des minutes ou des secondes à changer, puis en faisant tourner ou défiler le chiffre correspondant pour le remplacer par un nouveau chiffre. Il est aussi possible de déplacer des aiguilles ou d'autres indicateurs avec le doigt sur l'écran tactile afin de mettre la montre à l'heure.

L'utilisateur peut changer la carte employée par défaut comme carte centrale 227, par exemple en effectuant une commande particulière à partir d'une des cartes de la ligne 219 à 225, par exemple au moyen d'une pression longue au centre de l'écran (par exemple au moins une seconde). Le changement peut aussi être effectué depuis un ordinateur connecté à la montre.

En se déplaçant vers la droite depuis la position centrale 227, l'utilisateur peut afficher différentes cartes correspondant à différents calendriers. Le calendrier 223 affiche la date du jour devant une image sélectionnable par l'utilisateur. La carte 224 permet d'afficher en mode calendrier le mois en cours; il est possible de passer en mode semaine, voire en mode jour, en défilant vers le haut depuis cette carte 224 dans une boucle qui revient à la carte de départ 224, ou depuis une autre carte calendrier. Depuis la carte 224, un défilement vers la droite permet d'afficher le calendrier des mois suivants. La dernière carte 225 affiche par exemple la phase de la lune.

La figure 4B illustre à titre d'exemple une organisation possible des cartes sur le deuxième niveau de cartes L2 de l'invention. Ce niveau regroupe des écrans correspondant à différentes complications horlogères affichables par la montre. L'utilisateur parvient sur la carte 237 de ce niveau à l'aide d'une longue pression effectuée depuis la carte centrale 227 du premier niveau.

En se déplaçant horizontalement vers la gauche, l'utilisateur peut choisir plusieurs types de chronographes, par exemple un chronographe au centième de secondes (carte 240), un chronographe avec affichage simultané du temps intermédiaire 239, ou un chronographe analogique à aiguilles 238. D'autres chronographes peuvent être ajoutés par l'utilisateur en chargeant de nouvelles cartes depuis son ordinateur.

Selon une caractéristique de l'invention, le comportement par défaut lors d'un défilement sur ce niveau est différent du comportement sur les autres niveaux ; une carte choisie, par exemple un chronographe particulier, reste affichée aussi longtemps que l'utilisateur ne revient pas lui-même vers une autre carte. L'affichage ne revient donc pas par défaut vers la carte centrale 237. Un comportement particulier, différent du comportement par défaut du niveau, peut cependant être attribué à chaque carte de chaque niveau. Il est aussi possible de prévoir un retour automatique à l'image central après un temps prédéfini à la suite d'un comptage.

Depuis un chronographe particulier, par exemple depuis le chronographe 239, l'utilisateur peut démarrer le comptage du temps par un tap rapide, enregistrer un temps intermédiaire avec un nouveau tap rapide, puis interrompre le comptage avec une pression prolongée au centre. La mise à zéro du chronographe se fait par exemple avec une pression prolongée de plus d'une seconde au centre de l'écran. D'autres modes de commande sont aussi possibles, par exemple en appuyant avec le doigt sur l'un des quatre coins de l'écran tactile (avec la présence ou non d'un logo ou élément graphique indicateur de la commande ou de la zone active).

L'utilisateur peut aussi choisir plusieurs types de compte à rebours en se déplaçant horizontalement vers la droite depuis la position centrale 237 (écrans 241, 242, 243). Dans l'exemple, un des comptes à rebours sur la carte 241 est numérique, celui représenté sur la carte 242 est illustré par un sablier etc. Comme pour les différents chronographes, l'utilisateur peut démarrer et interrompre un compte à rebours par une action particulière depuis une des cartes 241 à 243.

D'autres complications ou outils peuvent être sélectionnés en se déplaçant verticalement depuis la carte centrale 237, afin de choisir par exemple des cartes correspondant à des films vidéo, des calendriers particuliers pour les marées, etc. L'utilisateur peut charger lui-même de nouvelles cartes depuis un ordinateur connecté à la montre.

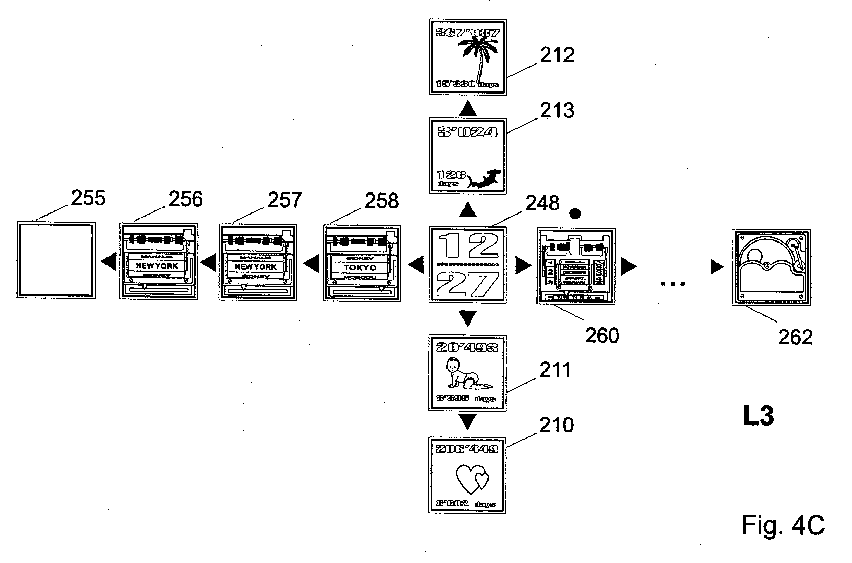

La figure 4C illustre à titre d'exemple une organisation possible des cartes sur le troisième niveau de cartes L3 de l'invention. Ce niveau regroupe autour de la carte centrale 248 sur l'axe vertical 255 à 262 des écrans affichant différentes montres mécaniques virtuelles simulées par le processeur de la montre et affichées sur l'écran tactile. L'utilisateur peut ainsi remplacer une montre mécanique simulée par une autre montre de type différent par une simple sélection sur cet axe horizontal du troisième niveau L3. L'axe vertical 210 à 212 est dans cet exemple identique à celui du premier niveau.

Les différentes cartes 255 à 262 de mouvements mécaniques simulés peuvent par exemple correspondre au même mouvement affichant l'heure de différents fuseaux horaires, par exemple l'heure de New York sur l'écran 257 et celle de Tokyo sur l'écran 258. Elles peuvent aussi afficher et simuler des montres complètement différentes, comme sur l'écran 262. Le programme de simulation d'un mouvement particulier fait de préférence partie de la carte et est téléchargeable avec cette carte, pour être exécutable par le processeur de la montre lorsque la carte associée est sélectionnée.

L'affichage d'un mouvement particulier implique de préférence la simulation en trois dimensions du mécanisme horloger. Afin de réduire le temps de calcul, certains éléments affichés, par exemple des éléments statiques tels que les ponts, les platines, etc sont de préférence constitués par des images fixes ou animées, tandis que des éléments dont la position dépend du temps, tels que les engrenages, axes, échappements, aiguilles etc sont de préférence synthétisés en temps réel par le processeur de la montre en fonction de l'heure en cours, et superposés par-dessus l'image chargée.

Afin d'améliorer le réalisme de la représentation, la montre intègre de préférence un accéléromètre. Les mesures d'accélération sont utilisées par le programme de synthèse d'image afin de simuler l'effet de chocs ou d'accélération sur le mouvement. Par exemple, il est possible de simuler l'effet de la gravité sur un organe réglant ou un tourbillon.

Afin d'améliorer encore le réalisme de la représentation, l'écran tactile permet de préférence d'agir directement sur les pièces affichées, par exemple afin de déplacer directement une aiguille ou n'importe quel autre élément du mouvement.

Le programme de synthèse d'images calcule de préférence des ombres et des reflets sur les différentes pièces. Un capteur de luminosité peut être utilisé pour améliorer la représentation des ombres et des reflets. Il est aussi possible de tenir compte de l'heure courante pour modifier ces éléments.

L'heure affichée par le mouvement mécanique simulée est avantageusement un résultat des calculs de simulation, et peut être différente de l'heure déterminée par le quartz de la montre, par exemple si le dimensionnement de l'organe réglant conduit à un isochronisme imparfait. L'heure affichée par le mouvement simulé peut aussi être affectée par des chocs détectés par l'accéléromètre, par des manipulations de l'utilisateur sur l'écran tactile, etc. La mise à l'heure peut se faire par exemple à partir de boutons ou couronnes sur la boîte de montre, ou de façon tactile par l'écran.

### Numéros de référence employés sur les figures

- 1: Montre-bracelet
- 2: Bracelet
- 3: Glace
- 4: Affichage matriciel
- 5: Boîtier
- 21: Colonne de cartes
- 22: Rangée de cartes
- 23: Carte de départ
- 219: Carte concernant l'heure de lever et de coucher de soleil
- 220-222: Carte pour afficher l'heure dans trois fuseaux horaires différents
- 210-213: Cartes pour afficher le nombre de jours ou d'heures depuis un événement donné
- 223: Carte pour l'affichage de la date en cours
- 224: Carte pour l'affichage d'un calendrier
- 2240- 2243: Cartes pour ajouter une alarme dans le calendrier / respectivement pour visualiser les semaines du mois
- 225: Carte pour afficher la phase de la lune
- 227: Carte centrale du niveau 1
- 237: Carte centrale du niveau 2
- 238-240: Cartes de chronographe sur niveau 2
- 241-243: Cartes de compte à rebours sur niveau 2
- 244-247: Cartes pour complications ou gadgets supplémentaires
- 248: Carte centrale du niveau 3
- 255-262: Cartes correspondant à des mouvements mécaniques virtuels

## Revendications

1. Montre bracelet (1) comportant :
un affichage matriciel numérique (4) ;
une glace tactile (3);
un circuit de traitement spécifiquement agencé pour interpréter les signaux de la glace tactile, pour sélectionner une carte (23, 220-225, 210-213) parmi plusieurs cartes disponibles en fonction de ces signaux, et pour afficher ladite carte sur la totalité dudit affichage matriciel numérique (4) ;
ladite glace tactile (3) étant une glace tactile à deux dimensions permettant de détecter les déplacements d'au moins un doigt en n'importe quel endroit de la glace tactile selon au moins deux directions différentes;
**caractérisée: en ce que** ledit circuit de traitement est spécifiquement agencé de manière à ce que les dits déplacements provoquent un défilement de cartes (23, 220-225, 210-213), puis à ce que ledit défilement s'arrête de lui-même après un instant déterminé ou lorsque la vitesse de défilement descend en dessous d'un seuil, de manière à aligner le bord d'une carte avec le bord de l'affichage matriciel numérique (4)afin de remplacer durablement la carte affichée initialement (23) par une autre carte;
et **en ce que** la direction et le sens du défilement correspondent à la direction et au sens dudit déplacement.

2. La montre de la revendication 1, dans laquelle chaque carte (23, 220-225, 210-213) comporte une image fixe ou rafraichie périodiquement, la taille de l'image correspondant à la taille dudit affichage matriciel numérique (4) de manière à ce que la carte affichée occupe tout ledit affichage matriciel numérique, chaque carte présentant une fonction particulière de la montre.

3. La montre de la revendication 2, dans laquelle chaque carte définit le comportement de l'interface tactile, et les fonctions ou modules qui doivent être démarrés en fonction des déplacements du doigt sur la carte.

4. La montre de l'une des revendications 1 à 3, le circuit de traitement étant agencé pour détecter des contacts simultanés en plusieurs points de la glace tactile (3), de manière à constituer un écran tactile multitouch.

5. La montre de l'une des revendications 1 à 4, le circuit de traitement étant agencé pour déterminer le déplacement du centre de gravité de la zone de contact (15) du doigt sur la glace tactile.

6. La montre de l'une des revendications 1 à 5, dans laquelle lesdites cartes sont arrangées en une pluralité de niveaux, le choix d'une carte au sein de chaque niveau se faisant soit par un défilement vertical, soit par un défilement horizontal, une commande particulière permettant de passer d'un niveau à l'autre.

7. La montre de l'une des revendications 1 à 6, dans laquelle au moins une desdites cartes permet de calculer et d'afficher une simulation de montre mécanique affichant l'heure, de manière à permettre à l'utilisateur de changer de montre mécanique affichée en faisant défiler des cartes.

8. Procédé pour modifier une carte (23, 220-225, 210-213) affichée par la montre-bracelet de l'une des revendications précédentes, comportant les étapes suivantes :
détecter le déplacement d'au moins un doigt selon au moins deux directions différentes en n'importe quel endroit d'une glace tactile à deux dimensions (3) ;
défilement de façon continue sur un affichage matriciel numérique (4) de plusieurs cartes disponibles en fonction des déplacements détectés, la direction et le sens du défilement correspondant à la direction et au sens dudit déplacement ;
interruption du défilement après un instant déterminé ou lorsque la vitesse descend en dessous d'un seuil, de manière à aligner le bord d'une carte avec le bord de l'affichage matriciel numérique (4) ;
affichage durable de la carte sélectionnée sur la totalité dudit affichage matriciel numérique (4).

9. Le procédé de la revendication 8, comportant en outre l'introduction d'une commande tactile de confirmation et/ou d'arrêt de défilement.

10. Le procédé de l'une des revendications 8 ou 9, comportant la détection de contacts simultanés en plusieurs points de la glace (3).

11. Le procédé de l'une des revendications 8 à 10, comportant la détermination du déplacement du centre de gravité de la zone de contact du doigt sur la glace.

12. Le procédé de la revendication 8, dans lequel la vitesse et/ou l'amplitude de défilement des cartes dépend de la vitesse et/ou de l'amplitude de déplacement du doigt sur la glace tactile (3).

13. Le procédé de l'une des revendications 10 à 12, dans lequel la vitesse de défilement des cartes est variable, le défilement étant ralenti avant de s'arrêter complètement.

14. Le procédé de la revendication 13, dans laquelle la vitesse de défilement des cartes est variable, le défilement étant ralenti à chaque passage d'une carte à l'autre.

15. Le procédé de l'une des revendications 8 à 14, dans laquelle la taille des cartes affichées est réduite pendant le défilement, de manière à afficher plusieurs cartes simultanément.

16. Le procédé de l'une des revendications 8 à 15, dans laquelle le défilement des cartes est interrompu par une brève pression sur la glace, de manière à provoquer la sélection et l'affichage de la carte la mieux centrée sur l'affichage au moment de cette interruption.

17. Le procédé de l'une des revendications 8 à 16, comportant une étape d'ajout, de suppression ou de réorganisation desdites cartes.

18. Le procédé de l'une des revendications 8 à 17, comportant une étape de chargement de nouvelles cartes au travers d'une interface d'entrées sortie de la montre.

19. Le procédé de l'une des revendications 8 à 19, dans lequel lesdites cartes sont arrangées en une pluralité de niveaux, le procédé comportant une étape de défilement vertical ou horizontal, et une étape d'introduction d'une commande particulière permettant de passer d'un niveau à un autre.

20. Le procédé de l'une des revendications 8 à 19, dans lequel une pluralité desdites cartes affiche une simulation de mouvement mécanique virtuel.

## Patentansprüche

1. Armbanduhr (1) mit:
einer Digitalmatrixanzeige (4);
einem berührungsempfindlichen Glas (3);
einem spezifisch so angeordneten Verarbeitungsschaltkreis, um die Signale aus dem berührungsempflindlichen Glas zu interpretieren, um eine Karte (23, 220-225, 210-213) unter mehreren verfügbaren Karten in Abhängigkeit dieser Signale auszuwählen, und um die besagte Karte auf der Gesamtheit der besagten Digitalmatrixanzeige (4) anzuzeigen;
wobei das besagte berührungsempfindlichen Glas (3) ein zweidimensionales berührungsempfindliches Glas zur Ermittlung von Bewegungen von mindestens einem Finger irgendwo auf dem berührungsempfindlichen Glas entlang mindestens zwei verschiedenen Richtungen ist;
**dadurch gekennzeichnet, dass** der besagte Verarbeitungsschaltkreis spezifisch so angeordnet ist, dass die besagten Bewegungen ein Vorbeiscrollen von Karten (23, 220-225, 210-213) veranlassen, und dann ein Anhalten von sich aus des besagten Vorbeiscrollens nach einem bestimmten Zeitpunkt, oder wenn die Scrollgeschwindigkeit unter eine Schwelle fällt, um die Kante einer Karte mit der Kante der Digitalmatrixanzeige (4) auszurichten, um die ursprünglich angezeigte Karte (23) durch eine andere Karte dauerhaft zu ersetzen;
und dass die Scrollrichtung der Richtung der besagten Bewegung entspricht.

2. Die Uhr von Anspruch 1, worin jede Karte (23, 220-225, 210-213) ein festes oder periodisch aktualisiertes Bild hat, worin die Grösse des Bildes der Grösse der besagten Digitalmatrixanzeige (4) entspricht, so dass die angezeigte Karte die Gesamtheit der besagten Digitalmatrixanzeige ausfüllt, wobei jede Karte eine besondere Funktion der Uhr zeigt.

3. Die Uhr von Anspruch 2, worin jede Karte das Verhalten der taktilen Schnittstelle und die Funktionen oder Module definiert, welche in Abhängigkeit der Bewegungen des Fingers auf der Karte gestartet werden sollen.

4. Die Uhr eines der Ansprüche 1 bis 3, wobei der Verarbeitungsschaltkreis so angeordnet ist, um simultane Kontakte an mehreren Orten des berührungsempfindlichen Glases (3) zu ermitteln, um einen Multi-Touch-Berührungsbildschirm zu bilden.

5. Die Uhr eines der Ansprüche 1 bis 4, wobei der Verarbeitungsschaltkreis so angeordnet ist, um die Verschiebung des Schwerpunktes der Kontaktzone (15) des Fingers auf dem berührungsempfindlichen Glas zu bestimmen.

6. Die Uhr eines der Ansprüche 1 bis 5, worin die besagten Karten auf einer Vielzahl von Ebenen angeordnet sind, wobei die Wahl einer Karte innerhalb jeder Ebene entweder durch senkrechtes Scrolling oder durch waagrechtes Scrolling getroffen wird, wobei ein besonderer Befehl den Wechsel von einer Ebene zur anderen ermöglicht.

7. Die Uhr eines der Ansprüche 1 bis 6, worin mindestens eine der besagten Karten es erlaubt, eine Simulation einer mechanischen Uhr zu berechnen und anzuzeigen, welche die Zeit angibt, um somit dem Benutzer zu ermöglichen, die angezeigte mechanische Uhr durch Scrollen von Karten zu wechseln.

8. Verfahren zur Änderung einer Karte (23, 220-225, 210-213), welche durch die Armbanduhr eines der vorhergehenden Ansprüche angezeigt wird, mit den folgenden Schritten:
Ermittlung der Bewegung von mindestens einem Finger entlang mindestens zwei verschiedene Richtungen irgendwo auf einem zweidiensionales berührungsempfindlichen Glas (3);
Scrollen auf fortlaufende Weise auf einer Digitalmatrixanzeige (4) von mehreren verfügbaren Karten gemäss den ermittelten Bewegungen, wobei die Scrollrichtung die Scrollrichtung der Richtung der besagten Bewegung entspricht;
Unberbrechung des Scrollens nach einem Vorbeiscrollen nach einem bestimmten Zeitpunkt, oder wenn die Scrollgeschwindigkeit unter eine Schwelle fällt, um die Kante einer Karte mit der Kante der Digitalmatrixanzeige (4) auszurichten;
dauerhafte Anzeige der ausgewählten Karte auf der Gesamtheit der besagten Digitalmatrixanzeige (4).

9. Das Verfahren von Anspruch 8, zudem mit der Eingabe eines berührungsgesteuerten Befehls zur Bestätigung und/oder zum Anhalten des Scrollens.

10. Das Verfahren eines der Ansprüche 8 oder 9, mit der Ermittlung von gleichzeitigen Kontakten an mehreren Orten des Glases (3).

11. Das Verfahren eines der Ansprüche 8 bis 10, mit der Bestimmung der Verschiebung des Schwerpunktes der Kontaktzone des Fingers auf dem Glas.

12. Das Verfahren von Anspruch 8, worin die Geschwindigkeit und/oder Amplitude des Kartenscrollens von der Geschwindigkeit und/oder Amplitude der Bewegung des Fingers auf dem berührungsempfindlichen (3) abhängig ist.

13. Das Verfahren eines der Ansprüche 10 bis 12, worin die Geschwindigkeit des Kartenscrollens variabel ist, wobei das Scrollen verlangsamt wird, bevor es gänzlich zum Stillstand kommt.

14. Das Verfahren von Anspruch 13, worin die Geschwindigkeit des Kartenscrollens variabel ist, wobei das Scrollen verlangsamt wird, jedesmal wenn eine Karte mit einer anderen ausgewechstelt wird.

15. Das Verfahren eines der Ansprüche 8 bis 14, worin die Grösse der angezeigten Karten während des Scrollens reduziert wird, um mehrere Karten gleichzeitig anzuzeigen.

16. Das Verfahren eines der Ansprüche 8 bis 15, worin das Kartenscrollen durch einen kurzen Druck auf das Glas unterbrochen wird, so dass die Auswahl und Anzeige der zum Zeitpunkt dieser Unterbrechung auf der Anzeige bestzentrierten Karte veranlasst wird.

17. Das Verfahren eines der Ansprüche 8 bis 16, mit einem Schritt des Zufügens, Löschens oder Reorganisierens der besagten Karten.

18. Das Verfahren eines der Ansprüche 8 bis 17, mit einem Schritt des Aufladens von neuen Karten durch eine Eingabe-/Ausgabeschnittstelle der Uhr.

19. Das Verfahren eines der Ansprüche 8 bis 19, worin die besagten Karten auf einer Vielzahl von Ebenen angeordnet sind, wobei das Verfahren den Schritt des senkrechten oder waagrechten Scrollens und einen Schritt der Eingabe eines bestimmten Befehls umfasst, welcher den Wechsel von einer Ebene zur anderen ermöglicht.

20. Das Verfahren eines der Ansprüche 8 bis 19, worin eine Vielzahl der besagten Karten eine Simulation eines virtuellen mechanischen Uhrwerks anzeigt.

## Claims

1. Wristwatch (1) having:
a digital matrix display (4);
a touch-sensitive glass (3);
a processing circuit specifically laid out so as to interpret the signals from the touch-sensitive glass, for selecting a card (23, 220-225, 210-213) from several available cards depending on these signals and for displaying said card on the entire digital matrix display (4);
said touch-sensitive glass (3) being a two-dimensional tactile glass for detecting movements of at least one finger at any place on the touch-sensitive glass along at least two different directions;
**characterized in that** said processing circuit is specifically laid out so as to cause cards (23, 220-225, 210-213) to scroll past and then so as for said scrolling to stop of itself after a prescribed time or when the scrolling speed drops below a threshold, so as to align the edge of a card with the edge of the digital matrix display (4) in order to lastingly replace the initially displayed card (23) with another card;
and **in that** the scrolling direction corresponds to the direction of said movement.

2. The watch of claim 1, wherein each card (23, 220-225, 210-213) has a fixed or periodically refreshed image, wherein the size of the image corresponds to the size of said digital matrix display (4) so that the displayed card occupies the whole of said digital matrix display, wherein each card shows a particular function of the watch.

3. The watch of claim 2, wherein each card defines the behavior of the tactile interface and the functions or modules that are to be launched depending on the movements of the finger on the card.

4. The watch of one of the claims 1 to 3, the processing circuit being laid out for detecting simultaneous contacts on several points of the tactile glass (3) so as to constitute a multi-touch tactile screen.

5. The watch of one of the claims 1 to 4, the processing circuit being laid out for determining the displacement of the center of gravity of the contact zone (15) of the finger on the touch-sensitive glass.

6. The watch of one of the claims 1 to 5, wherein said cards are arranged in a plurality of levels, wherein the choice of a card within each level is made either by scrolling vertically or by scrolling horizontally, wherein a particular command makes it possible to switch from one level to another.

7. The watch of one of the claims 1 to 6, wherein at least one of said cards makes it possible to calculate and display a simulation of a mechanical watch displaying the time, so as to enable the user to change the mechanical watch displayed by scrolling cards.

8. Method for modifying a card (23, 220-225, 210-213) displayed by the wristwatch of one of the preceding claims, having the following steps:
detecting the movement of at least one finger along at least two different directions on a two-dimensional touch-sensitive glass (3);
scrolling in a continuous fashion on a digital matrix display (4) of several available cards depending on the detected movements, wherein the scrolling direction corresponds to the direction of said movement;
interrupting the scrolling after a prescribed time or when the scrolling speed drops below a threshold, so as to align the edge of a card with the edge of the digital matrix display (4);
lastingly displaying the selected card on the whole of said digital matrix display (4).

9. The method of claim 8, further including the entering of a touch command for confirming and/or stopping the scrolling.

10. The method of one of the claims 8 or 9, comprising the detecting of simultaneous contacts on several points of the glass (3).

11. The method of one of the claims 8 to 10, comprising the determining of the displacement of the center of gravity of the contact zone of the finger on the glass.

12. The method of claim 8, wherein the card scrolling speed and/or amplitude depend on the speed and/or amplitude of movement of the finger on the touch-sensitive glass (3).

13. The method of one of the claims 10 to 12, wherein the card scrolling speed is variable, the scrolling being slowed down before stopping completely.

14. The method of claim 13, wherein the card scrolling speed is variable, the scrolling being slowed down each time a card is switched to another one.

15. The method of one of the claims 8 to 14, wherein the size of the displayed cards is reduced during scrolling, so as to display several cards simultaneously.

16. The method of one of the claims 8 to 15, wherein the card scrolling is interrupted by a brief pressure on the glass, so as to cause the card best centered on the display at the time of the interruption to be selected and displayed.

17. The method of one of the claims 8 to 16, comprising a step of adding, deleting or reorganizing said cards.

18. The method of one of the claims 8 to 17, comprising a step of loading new cards through an input-output interface of the watch.

19. The method of one of the claims 8 to 19, wherein said cards are arranged in a plurality of levels, wherein the method comprises a step of vertical or horizontal scrolling and a step of entering a particular command for switching from one level to another.

20. The method of one of the claims 8 to 19, wherein a plurality of said cards displays a simulation of a virtual mechanical movement.
